(19) Europäisches Patentamt / European Patent Office / Office européen des brevets

(11) **EP 3 258 623 A1**

(12) **EUROPEAN PATENT APPLICATION**

(43) Date of publication:
20.12.2017 Bulletin 2017/51

(51) Int Cl.:
*H04B 10/112* (2013.01)    *H04B 13/02* (2006.01)

(21) Application number: 16174856.1

(22) Date of filing: 16.06.2016

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **BAE Systems PLC
London SW1Y 5AD (GB)**

(72) Inventor: **The designation of the inventor has not
yet been filed**

(74) Representative: **BAE SYSTEMS plc
Group IP Department
P.O. Box 87
Warwick House
Farnborough Aerospace Centre
Farnborough
Hampshire GU14 6YU (GB)**

(54) **OPTICAL COMMUNICATION DEVICE**

(57)    Apparatus for and method of transmitting an optical signal by a Free Space Optical, FSO, communication system, the method comprising: transmitting, by an optical signal transmitter (104), an optical signal (700) into at least part of a volume of an optical medium (302); and controlling, by a controller, the optical signal transmitter (104), to scan the at least part of the volume (302) using the optical signal (700) in a sequence of non-overlapping loops (704, 708). The sequence of non-overlapping loops (704, 708) may be a sequence of non-overlapping, concentric circular loops.

# Fig. 6

EP 3 258 623 A1

## Description

### FIELD OF THE INVENTION

The present invention relates to optical communication devices.

### BACKGROUND

Free Space Optical (FSO) communications systems are well known for their ability to provide high data rate communications links. A FSO communication system typically consists of a pair of nodes or communication devices. Each node typically comprises an optical source, for example a laser or light emitting diode (LED), and an optical receiver. In use, the optical source of each node is aligned with the optical receiver of the other node. Modulation of optical signals emitted by the optical sources allows for the bidirectional transfer of data between the two nodes. Thus, there is a datalink between the nodes.

Most current FSO systems are mounted in fixed positions on the Earth and are manually aligned with each other. Commercial systems are available which can offer data rates of several Giga-bits per second (Gbps) over a range of several kilometres.

It is desirable to have communications systems that allow for underwater communications. Radio Frequency (RF) signals tends to be heavily attenuated by seawater, and hence the range of RF communications systems tends to be severely limited. Acoustic systems can offer low data rate transmission (~kbps) over long ranges, but are typically overt which is undesirable for certain applications.

Optical communications systems have also been developed for underwater applications. Such underwater optical communications systems tend to provide relatively high data rate communications over short to medium ranges, for example up to a 300m or so.

Like land-based FSO communication systems, an underwater optical communication system typically comprises a pair of nodes, each node will comprising an optical source and detector. However, unlike land-based FSO communication systems (where node positions are typically fixed), underwater modes tend to be mobile. Hence, in underwater applications, the position of each node, and hence the range and angular separation between the nodes, is not fixed. Thus, in underwater applications, alignment between opposing optical sources and detectors tends to be required in order for the communications system to function. In addition, many underwater nodes are unmanned nodes (e.g. unmanned vehicle), and hence manual alignment between a pair of nodes tends not to be possible. Furthermore, while each underwater node may have some estimate of the relative location of the opposing underwater node (e.g. a preprogrammed location and navigation using GPS/inertial systems, or through use of a separate data link) there may be a large range and angular uncertainty in its position.

Hence, a strategy is required for each node to accurately acquire the location of the opposing node before beam alignment (and hence optical communications) can occur. In addition, since the platforms may still be mobile, active beam alignment may be required during data transfer (tracking).

### SUMMARY OF THE INVENTION

The present inventors have realised that it would be beneficial for optical communication nodes or devices to be able to reliably and accurately acquire the location of the opposing node, for example, before beam alignment and optical communications occur. The present inventors have further realised that it would be beneficial for nodes to be capable of active beam alignment (i.e. tracking) during data transfer, particularly for mobile nodes.

The present inventors have further realised that using an optical beam with large divergence, for example to illuminate the area surrounding the transmitting node to ensure that the other each node receives some optical power, tends to be very power inefficient since most of the transmitted optical power does not reach the detector of the opposing node. The present inventor have realised that such a strategy tends to only be suitable in clean water and/or at short range.

The present inventors have further realised that using a lens to focus the transmitted light to produce a focussed "spot" on the communications detector tends to be highly dependent on angle of incidence of the incoming light. Thus, large incidence angles may result in all or part of the spot being displaced from the centre of the communications detector, thereby reducing the communication link margin.

The present inventors have further realised that scanning a narrow/collimated light beam across an angular region of uncertainty may be inefficient. For example, each node in a pair of nodes may comprise an angle of arrival (AoA) light sensor. A first of the nodes may scan a narrow light beam across the angular search area. At some point during the scan, the light beam from the first node is incident on the AoA sensor of the second node, thereby allowing the second node to infer the angular location of the first node. The second node may then direct a narrow light beam towards the inferred location of the first node. The AoA sensor of the first node may then detect the beam from the second node, and, using measurements of the beam, infer the location of the second node. The first node may then stop scanning, and direct its narrow light beam in the inferred location of the second node. Communications between the nodes may then begin. However, the present inventors have realised that, for such a system and method, scanning a large angular search area with a narrow beam may take significant amount of time. Thus, acquiring the communication link tends to use increased time and/or power. The present inventors have further realised that the link margin may not be known (for example, since the water conditions and/or the range between nodes may not be known). Hence, if conditions happen to be favourable (for example, the distance between nodes is relatively short range, and/or the water through which communications are to occur is relatively clear), time may be wasted scanning the search area with a collimated beam of very high irradiance, when a scan with a larger beam (with lower irradiance) may provide the AoA sensors of the nodes with sufficient power to enable location of the other node.

The present inventors have realised it would be beneficial to provide a system and method that overcome the above mentioned deficiencies of using optical beams having large divergence and also the above mentioned deficiencies of using narrow/collimated optical beams.

In a first aspect, the present invention provides a method of transmitting an optical signal by a Free Space Optical, FSO, communication system. The method comprises: transmitting, by an optical signal transmitter, an optical signal into at least part of a volume of an optical medium; and controlling, by a controller, the optical signal transmitter, to scan the at least part of the volume using the optical signal in a sequence (i.e. a succession (one after another)) of a plurality of non-overlapping loops.

When scanning the volume, to scan a loop, the controller controls the transmitter such that at least part of the transmitter moves along a path that defines a loop, i.e. a path that crosses itself at least once. For example, when scanning the volume, the controller controls the transmitter to move along a path that has its start point the same point as its end point. Thus, during the scanning of the volume, a path over a plane onto which the optical signal is projected, defines a plurality non-overlapping loops on that plane, i.e. a plurality of non-overlapping paths, each having their start points be the same as their end points.

The sequence of non-overlapping loops may be a sequence of non-overlapping, concentric loops. Each of loops in the sequence may be a substantially circular loop.

A beam divergence of the transmitted optical signal may be:

$$\phi = \frac{\theta}{2j-1}$$

Radii of the loops in the sequence of loops may be equal to:

$$r = \frac{k}{2j-1}\theta, \text{ for } k = 0,...,j$$

where θ is a maximum divergence of the optical signal transmitter, and $j$ is an integer. j may, for example, be greater than or equal to 2.

The step of controlling may comprise controlling the optical signal transmitter to scan the at least part of the volume by repeating at least part of one or more of the loops at least twice. At least part of one or more of the loops may be repeated at least twice. At least part of one or more of the loops may be repeated at most twice. At least part of one or more of the loops may be repeated exactly twice.

Transmitting the optical signal may comprise: generating an optical signal; modifying a divergence and an irradiance of the generated optical signal such that at least one of the divergence and the irradiance is equal to a preselected value; and transmitting the modified optical signal.

The method may further comprise: transmitting, by the optical signal transmitter or a further optical signal transmitter, a further optical signal into at the least part of the volume, the further optical signal having a different beam divergence and irradiance than the optical signal; and controlling, by a controller, the optical signal transmitter or the further optical signal transmitter, to scan the at least part of the volume using the further optical signal in a further sequence of non-overlapping loops.

The method may further comprise: responsive to transmitting the optical signal into the at least part of the volume, receiving, by an optical signal detector, a response optical signal; and determining, using measurements of the response optical signal by the optical signal detector, by one or more processors, a location of a source of the response optical signal.

A field of view of the optical signal transmitter may be directed in a same direction as a field of view of the optical signal detector.

The optical medium may be water.

In a further aspect, the present invention comprises a Free Space Optical, FSO, communication system comprising: an optical signal transmitter configured to transmit an optical signal into at least part of a volume of an optical medium; and a controller configured to control the optical signal transmitter to scan the at least part of the volume using the optical signal in a sequence of non-overlapping loops.

The sequence of non-overlapping loops may be a sequence of non-overlapping, concentric circular loops. The controller may be further configured to scan the at least part of the volume by repeating at least part of one or more of the loops at least twice.

The FSO communication system may further comprise an optical signal detector configured to, responsive to the optical signal transmitter transmitting the optical signal into the at least part of the volume, receive a response optical signal. The FSO communication system may further comprise one or more processors configured to determine, using measurements of the response optical signal by the optical signal detector, a location of a source of the response optical signal. A field of view of the optical signal transmitter may be directed in a same direction as a field of view of the optical signal detector.

In a further aspect, the present invention comprises a vehicle comprising an FSO communication system according to any preceding aspect. The vehicle may be a submersible vehicle.

BRIEF DESCRIPTION OF THE DRAWINGS

Figure 1 is a schematic illustration (not to scale) showing a vehicle comprising an optical communications system;

Figure 2 is a process flow chart showing certain steps of an optical communications process;

Figure 3 is a schematic illustration (not to scale) showing transmission of a first light beam from the vehicle;

Figure 4 is a schematic illustration (not to scale) showing transmission of a second light beam from the vehicle;

Figure 5 is a schematic illustration (not to scale) showing a scan pattern used for the second light beam;

Figure 6 is a schematic illustration (not to scale) showing transmission of a third light beam from the vehicle;

Figure 7 is a schematic illustration (not to scale) showing a scan pattern used for the third light beam;

Figure 8 is a schematic illustration (not to scale) showing a further vehicle transmitting a response light beam the vehicle in response to the further vehicle detecting the third light beam;

Figure 9 is a schematic illustration (not to scale) showing two-way Free Space Optical communications between the vehicles and the further vehicle;

Figure 10 is a schematic illustration (not to scale) showing a further optical communications system acquiring a communications link; and

Figure 11 is a schematic illustration (not to scale) showing the further optical communications system performing tracking and communication processes.

DETAILED DESCRIPTION

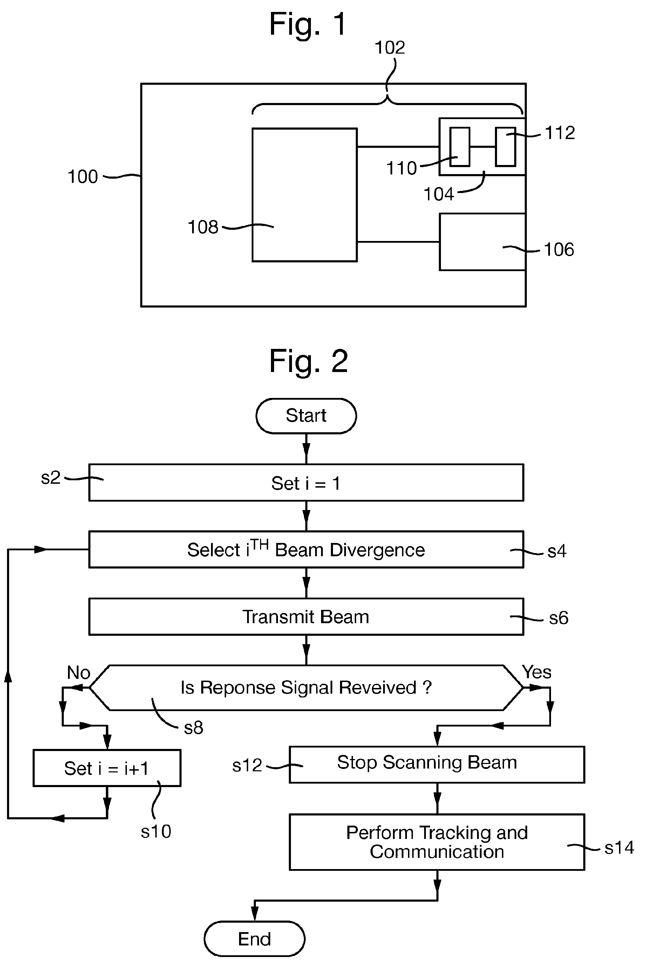

Figure 1 is a schematic illustration (not to scale) showing an example vehicle 100 in which an embodiment of an optical communications system 102 is implemented.

The vehicle 100 is an unmanned, submersible (or underwater) vehicle, i.e. a vehicle that is configured to operate while submerged, for example, in water.

In this embodiment, the optical communications system 102 comprises an optical signal transmitter 104, an optical signal detector 106, and a processor 108.

The optical signal transmitter 104 is configured to transmit an optical signal (such as a laser beam) from the vehicle 100, as described in more detail later below with reference to Figures 2 to 9. In this embodiment, the optical signal transmitter 104 comprises an optical signal generator 110 and lens 112.

The optical signal generator 110 is configured to generate an optical signal, and send the generated optical signal to the lens 112 for transmission from the vehicle 110. The optical signal generator 110 may comprise, for example, a laser or light emitting diode (LED). The optical signal generator 110 may be configured to modulate the generated optical signals to encode data.

In this embodiment, the lens 112 is arranged to focus the generated optical signal from optical signal generator 110, and direct the focussed optical signal away from the vehicle 100. The lens 112 is controllable to vary the divergence of the transmitted optical signal. For example, the lens 502 may be a translating lens, a zoom lens, a fluidic lens, a programmable liquid crystal lens, or a programmable holographic lens (such as a switchable Bragg Element or a Digilens). The lens 502 is controlled by the processor 108.

The optical signal transmitter 104 is operatively coupled to the processor 108 such that the processor 108 may control operation of the optical signal transmitter 104, i.e. of the optical signal generator 110 and the lens 112.

The optical signal detector 106 is configured to detect an optical signal (such as a laser beam) incident on the optical signal detector 106, and to generate an output corresponding to the received optical signal. In this embodiment, the optical signal detector 106 comprises an Angle of Arrival (AoA) sensor having a relatively narrow Field of View (FoV).

The optical signal detector 106 is operatively coupled to the processor 108 such that the processor 108 may receive an output of the optical signal detector 106. The processor 108 is configured to process the received output of the of the optical signal detector 106 as described in more detail later below with reference to Figure 2.

In this embodiment, the optical signal transmitter 104 is steerable such that the direction, relative to the vehicle 100, in which an optical signal is transmitted by the optical signal transmitter 104 may be varied. Thus, an optical signal transmitted by the optical signal transmitter 104 may be scanned over an area. The steering of the optical signal transmitter 104 is controlled by the processor 108. Also, in this embodiment, the optical signal detector 106 is steerable such that the FoV of the optical signal detector 106 may be varied. The steering of the optical signal detector 106 is controlled by the processor 108.

The optical signal transmitter 104 and the optical signal detector 106 may be steered in any appropriate way. For example, in some embodiments the optical signal transmitter 104 and/or the optical signal detector 106 are mounted to a pan/tilt unit which is controlled by the processor 108. In some embodiments, one or more steering mirrors is used to steer the optical signal transmitter 104 and/or the optical signal detector 106. The one or more steering mirrors may be controlled by the processor 108.

In this embodiment, the optical signal transmitter 104 and the optical signal detector 106 are directed in substantially the same direction.

Apparatus, including the processor 108, for implementing the above arrangement, and performing the method steps to be described later below, may be provided by configuring or adapting any suitable apparatus, for example signal amplifiers, one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

Figure 2 is a process flow chart showing certain steps of an embodiment of an optical communications process. In this embodiment, the optical communications process by which the submersible vehicle 100 communicates in an underwater environment with a further submersible vehicle.

At step s2, the processor 108 sets the value of an iteration index, i, to be equal to one, i.e. i = 1.

In this embodiment, the optical communications process comprises iteratively performing steps s4 to s8. The iteration index i is indicative of an iteration number of the process.

At step s4, the processor 108 selects a value for the divergence of the ith light beam to be transmitted from the vehicle 100.

In this embodiment, in the first iteration of steps s4 to s8 (i.e. for i = 1), the value for the divergence of the first light beam to be transmitted from the vehicle 100 is selected to be as large as possible, i.e. the largest possible beam divergence that is achievable by the lens 112.

At step s6, the processor 108 controls the optical signal transmitter 104 to transmit a light beam having the selected beam divergence.

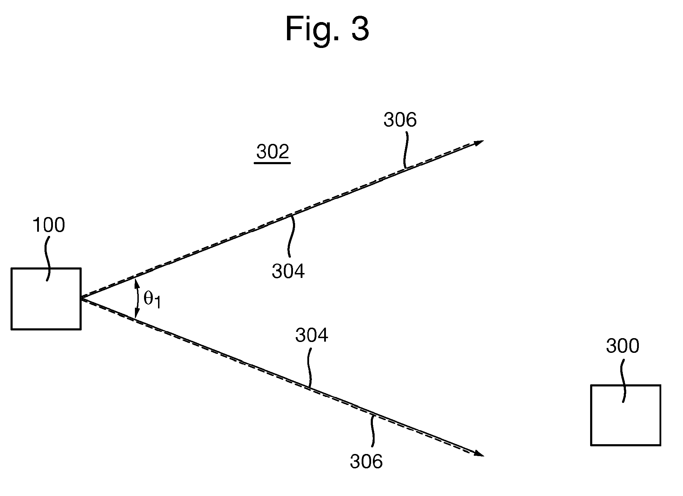

Figure 3 is a schematic illustration (not to scale) showing transmission of the first light beam at the (i = 1)th iteration of step s6.

In this embodiment, the vehicle 100 transmits the first light beam in a direction of the further vehicle 300, through an optical medium 302 which, in this embodiment, is water (for example, seawater).

The first light beam is indicated in Figure 3 by two solid arrows and the reference numeral 304. The first light beam 304 is bounded by these arrows. In this embodiment, the first light beam 304 has a divergence of $\theta_1$, where $\theta_1$ is the maximum divergence achievable by the optical signal transmitter 104.

In this embodiment, the first light beam 304 substantially covers the entirety of a search area or search volume, which is indicated in Figure 3 by dotted lines and the reference numeral 306. The search area 306 is an area in which the vehicle 300 is to transmit light beam to attempt to establish a communications link with the further vehicle 300. In this embodiment, since, in the first iteration i = 1, the first light beam 304 covers all of the search area 306, the first light beam 304 is not scanned across the search area 306. In particular, in this embodiment, the search area 306 is defined by the value $\theta_1$.

In this embodiment, the further vehicle 300 comprises an optical communications system capable of detecting optical signals incident on the further vehicle 300, and further configured to transmit optical signals. For example, in some embodiments, the further vehicle may comprise the optical communications system 102 described in more detail earlier above with reference to Figure 1.

In this embodiment, the communications conditions (for example the distance between the vehicle 100 and the further vehicle, and/or the turbidity of the water 302) are such that an optical detector on board the further vehicle 300 does not receive sufficient power from the first light beam 304 to enable it to detect the first light beam 304. In other words, the first light beam 304 is attenuated by the water 302 to such a degree that, in effect, the first light beam 304 is not received by the further vehicle 300.

Because, in the first iteration i = 1, the further vehicle 300 does not detect the light beam transmitted by the vehicle, the further vehicle 300 does not transmit a response optical signal towards the vehicle 100.

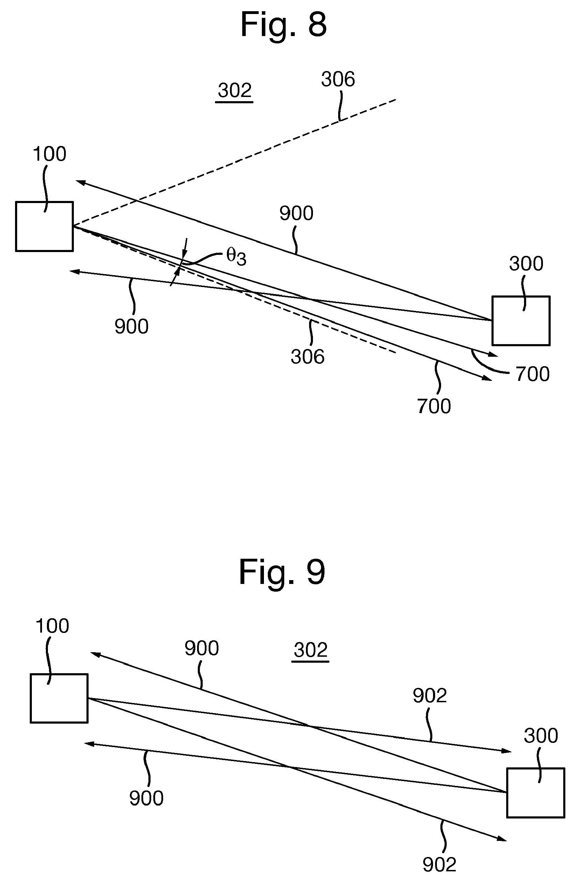

However, in other embodiments, the communications conditions may be more favourable and such that the wide first beam 304 is received and detected by the optical detector of the further vehicle 300. In this case, the further vehicle will transmit a response signal back to the vehicle 100, which is received at the vehicle 100, as described in more detail later below with reference to Figure 8.

At step s8, the processor 108 determines whether or not the optical signal detector 106 has detected an incident optical signal. In particular, in this embodiment, the processor 108 determines whether or not the optical signal detector 106 has detected a response optical signal from the further vehicle 100.

If at step s8, the processor 108 determines that the optical signal detector 106 has detected an incident optical signal, the method proceeds to step s12. Steps s12 to s14 will be described in more detail later below after a description of step s10 and subsequent iterations (i = 2, 3, ...) of steps s4 to s8.

However, if at step s8, the processor 108 determines that the optical signal detector 106 has not detected an incident optical signal, the method proceeds to step s10.

At step s10, the processor 108 increase the value of the iteration index, i, by one, i.e. $i = i + 1$.

After step s10, the method proceeds back to step s4 for a next iteration of steps s4 to s8.

In this embodiment, in the subsequent iterations of step s4, the processor 108 selects successively decreasing values for the divergence of the light beam to be transmitted from the vehicle 100. In other words, in each iteration of step s4, the processor 108 selects a value for the divergence of the light beam that is lower than the value selected in the previous iteration.

In particular, in this embodiment, at each iteration of step s4, the processor 108 selects the value for the divergence of the light beam to be transmitted from the vehicle 100 using the following formula:

$$\theta_i = \frac{\theta_1}{2i - 1} \ \text{for } i = 1, 2, 3, ...$$

where: *i* is the iteration index, i = 1, 2, 3,...;

$\theta_i$ is the selected light beam divergence for the *i*th iteration;

$\theta_1$ is the maximum light beam divergence achievable by the lens 112.

Thus, for example, in a second iteration (i = 2) of steps s4 to s8, the selected beam divergence is $\theta_1/3$; in a third iteration (i = 3) of steps s4 to s8, the selected beam divergence is $\theta_1/5$; in the fourth iteration (i = 4) of steps s4 to s8, the selected beam divergence is $\theta_1/7$; and so on.

In this embodiment, the divergence of the transmitted light beams in the subsequent iterations of step s6 (i.e. iterations i = 2, 3, ...) is less than that in the first iteration, i = 1. Thus, in subsequent iterations of step s6, the transmitted light beam will not cover the entirety of the search area 306 at the same time. Thus, in this embodiment, in the subsequent iterations of step s6, the processor 108 controls the optical signal transmitter 104 to scan the transmitted light beam across all of the search area 306.

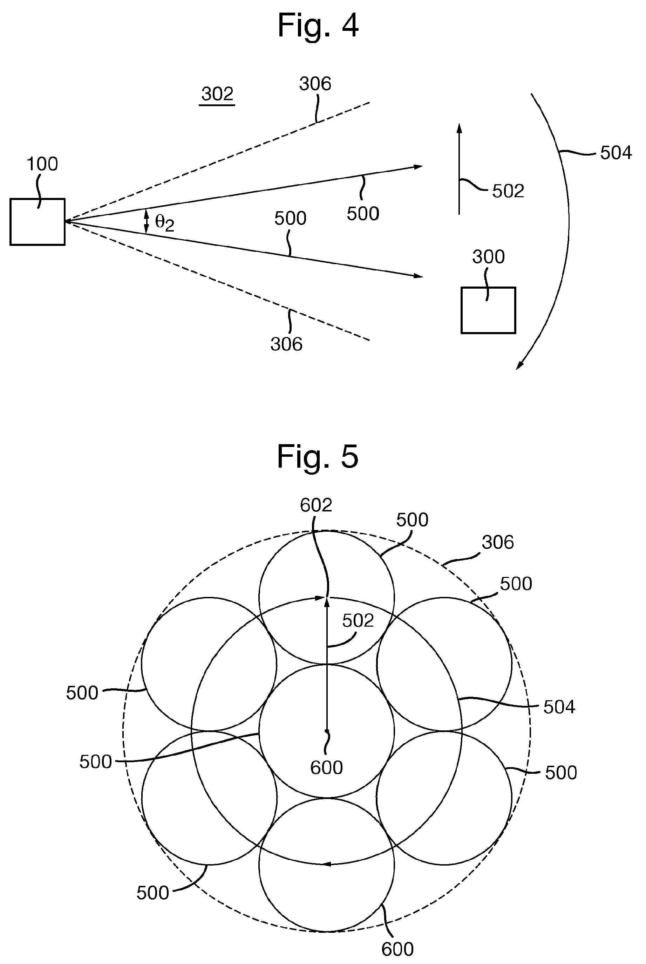

In particular, in this embodiment, at each iteration of step s6, the processor 108 controls the optical signal transmitter 104 to scan the transmitted light beam in a sequence of non-overlapping concentric circles, as described in more detail below with reference to Figures 4 to 7.

In this embodiment, the power used to generate the light beam is substantially the same for each iteration. Thus, decreasing the divergence of the light beam increases its irradiance. In other words, in each iteration of step s6, the irradiance of the light beam is higher than the irradiance in the previous iteration. Thus, at subsequent iteration, the light tends to penetrated through the water 302 to a greater extent, in effect increasing the acceptable attenuation of the signal through the water path.

In particular, in this embodiment, at each iteration of step s6, the irradiance of the transmitted light beam tends to be in accordance with the following formula:

$$I_i = (2i - 1)^2 I_1 \ \text{for } i = 1, 2, 3, ...$$

where: *i* is the iteration index, i = 1, 2, 3,...;

$I_i$ is the irradiance of the *i*th light beam;

$I_1$ is the irradiance of the first light beam 304.

Figure 4 is a schematic illustration (not to scale) showing transmission of the light beam at the (i = 2) iteration of step s6.

In this embodiment, the vehicle 100 transmits the second light beam (bounded by solid arrows 500) in a direction of the further vehicle 300, through the optical medium 302. The second light beam 500 has a divergence of $\theta_2$, which, in this embodiment, is equal to $\theta_1/3$.

By decreasing the divergence of the beam (from $\theta_1$ to $\theta_2$), the effective range of the optical communication system 102 is increased.

In this embodiment, to cover the entirety of the search area 306, the second light beam 500 is scanned in a pattern indicated in Figure 4 by arrows and the reference numerals 502 and 504, and described in more detail below with reference to Figure 5.

Figure 5 is a schematic illustration (not to scale) showing a scan pattern implemented by the optical communications system 102 to scan the second light beam 500 over the search area 306.

Figure 5 shows the search area 306 from the point of view of the vehicle 100. In this embodiment, from the point of view of the vehicle 100, the search area 306 is substantially circular.

In this embodiment, the search area 306 is scanned as follows.

Firstly the processor 108 controls the optical signal transmitter 104 to transmit a light beam at the centre 600 of the search area 306. In particular, the optical signal transmitter 104 is centred with respect to the search area 306.

Secondly, after scanning at the centre 600 of the search area 306, the processor 108 controls the optical signal transmitter 104 to move its FoV towards the edge of the search area 306 through an angular distance of $\theta_1/3$ (i.e. the divergence of the light beam 500 in this iteration). In particular, the optical signal transmitter 104 is centred at point 602 shown in Figure 5. This movement is indicated in Figure 5 by a straight arrow and the reference numeral 502.

Thirdly, the processor 108 controls the optical signal transmitter 104 to scan an outer portion of the search area 306 by moving its FoV in a circular loop about the centre 600. This movement is indicated in Figure 5 by an arrow and the reference numeral 504. Thus, an annulus surrounding the scanned central portion is scanned.

Advantageously, the scanned circular loop 504 does not overlap with the originally scanned central portion. Thus, scanning of the search area 306 tends to be efficient in term of both time and power.

In this embodiment, the processor 108 controls the optical signal transmitter 104 to scan the circular loop 504 twice. This double scanning of the circular loop advantageously tends to facilitate the detection of a return signal by the vehicle 100, as described in more detail later below.

In this embodiment, the communications conditions are such that an optical detector on board the further vehicle 300 does not receive sufficient power from the second light beam 500 to enable it to detect the second light beam 500. In other words, the second light beam 500 is attenuated by the water 302 to such a degree that, in effect, the second light beam 500 is not received by the further vehicle 300.

Because, in the second iteration i = 2, the further vehicle 300 does not detect the light beam transmitted by the vehicle 100, the further vehicle 300 does not transmit a response optical signal towards the vehicle 100. Thus, in the second iteration of step s8, the processor 108 determines that no response optical signal is received at the optical signal detector 106, and a third iteration (i = 3) of steps s4 to s8 is performed.

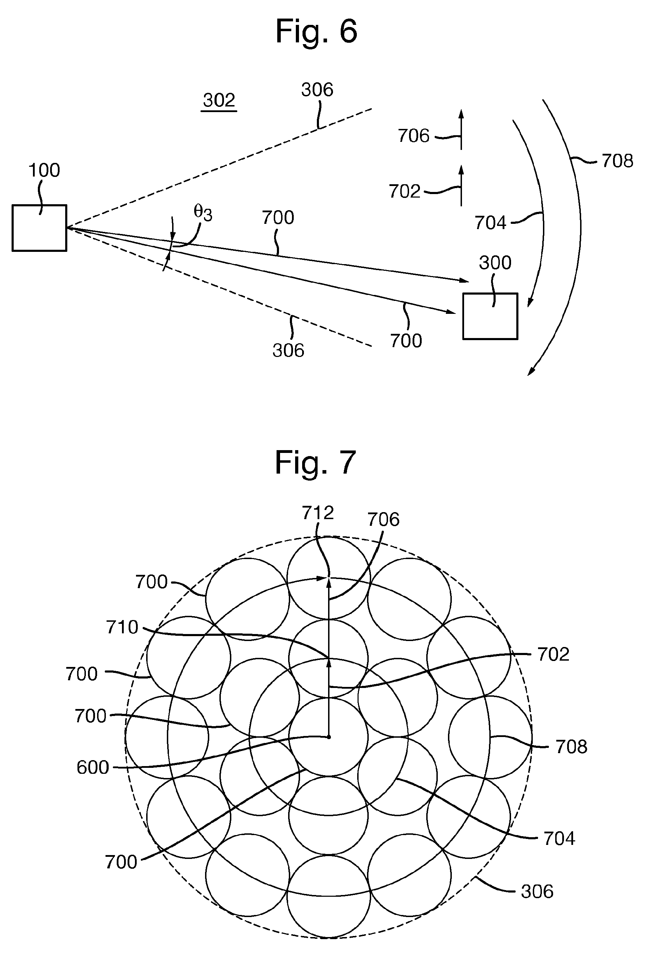

Figure 6 is a schematic illustration (not to scale) showing transmission of the light beam at the (i = 3) iteration of step s6.

In this embodiment, the vehicle 100 transmits the third light beam (bounded by solid arrows 700) in a direction of the further vehicle 300, through the optical medium 302. The third light beam 700 has a divergence of $\theta_3$, which, in this embodiment, is equal to $\theta_1/5$.

By decreasing the divergence of the beam (from $\theta_2$ to $\theta_3$), the effective range of the optical communication system 102 is increased.

In this embodiment, to cover the entirety of the search area 306, the third light beam 700 is scanned in a pattern indicated in Figure 6 by arrows and the reference numerals 702-708, and described in more detail below with reference to Figure 7.

Figure 7 is a schematic illustration (not to scale) showing a scan pattern implemented by the optical communications system 102 to scan the third light beam 700 over the search area 306. Figure 7 shows the search area 306 from the point of view of the vehicle 100.

In this embodiment, the search area 306 is scanned as follows.

Firstly the processor 108 controls the optical signal transmitter 104 to transmit the third light beam 700 at the centre 600 of the search area 306. In particular, the optical signal transmitter 104 is centred with respect to the search area 306.

Secondly, after scanning at the centre 600 of the search area 306, the processor 108 controls the optical signal transmitter 104 to move its FoV towards the edge of the search area 306 through an angular distance of $\theta_1/5$ (i.e. the divergence of the light beam 500 in this iteration). This movement is indicated in Figure 7 by a straight arrow and the reference numeral 702. The optical signal transmitter 104 is centred at point 710 shown in Figure 7.

Thirdly, the processor 108 controls the optical signal transmitter 104 to scan an annular portion of the search area 306 by moving its FoV in a circular loop about the centre 600, maintaining the separation between the centre 600 and the transmitted light beam. This movement is indicated in Figure 7 by an arrow and the reference numeral 704. Thus, an annulus surrounding the scanned central portion is scanned. Advantageously, this scanned circular loop 704 does not overlap with the originally scanned central portion. Thus, scanning of the search area 306 tends to be efficient in term of both time and power.

In this embodiment, the processor 108 controls the optical signal transmitter 104 to scan the circular loop 704 twice.

Next, after scanning the circular loop 704, the processor 108 controls the optical signal transmitter 104 to move its FoV towards the edge of the search area 306 through an angular distance of $\theta_1/5$ (i.e. the divergence of the light beam 500 in this iteration). This movement is indicated in Figure 7 by a straight arrow and the reference numeral 706. The optical signal transmitter 104 is centred at point 712 shown in Figure 7.

Lastly, the processor 108 controls the optical signal transmitter 104 to scan an outer annular portion of the search area 306 by moving its FoV in a circular loop about the centre 600, maintaining the separation between the centre 600 and the transmitted light beam. This movement is indicated in Figure 7 by an arrow and the reference numeral 708. Thus, an annulus surrounding the scanned central portion and the circular loop 704 is scanned. Advantageously, this scanned circular loop 704 does not overlap with the originally scanned central portion or the scanned circular loop 704. Thus, scanning of the search area 306 tends to be efficient in term of both time and power.

In this embodiment, the processor 108 controls the optical signal transmitter 104 to scan the circular loop 708 twice.

More generally, the relationship between the iteration number and the number of concentric circular loops to be scanned is given by the following formula:

$$N_i = i - 1, \text{ for } i = 1, 2, 3, \ldots$$

where $N_i$ is number of concentric circular loops to be scanned at the $i$th iteration of steps s4 to s8. Thus, for example, at the second iteration, i = 2, there is one loop 504 scanned about the central portion of the search area 306. Also, at the third iteration, i = 3, there are two loops 704, 708 scanned about the central portion of the search area 306.

Also, the relationship between the iteration number and the radii of concentric circular loops to be scanned is given by the following formula:

$$r_i = \frac{k}{2i - 1} \theta_1, \text{ for } k = 0, \ldots, i$$

where $r_i$ is the radius (i.e. a distance between the centre of the search area 306 and the centre of the FoV of the optical signal transmitter 104) of a loop at the $i$th iteration of steps s4 to s8. Thus, for example, at the second iteration, i = 2, the radius of the loop 504 scanned about the centre 600 of the search area 306 is $\theta_1/3$. Also, at the third iteration, i = 3, the radii of the two loops 704, 708 are $\theta_1/5$ and $2\theta_1/5$ respectively.

In this embodiment, the communications conditions and the increased irradiance of the third beam 700 are such that an optical detector on board the further vehicle 300 receives sufficient power from the third light beam 700 to enable it to detect the third light beam 700.

As shown in Figure 8, in this embodiment, the further vehicle 300 detects the third light beam 700 transmitted by the vehicle 100. A processor of the further vehicle 300 then determines a location of the vehicle 100 using the measured third light beam 700. The further vehicle 300 then uses the determined location to transmit a response light beam 900 back towards the vehicle 100.

In this embodiment, when the third beam 700 from the vehicle 100 scans over the optical detector of the further vehicle 300 with sufficient irradiance, there is a finite time before the further vehicle 300 can direct a response light beam back towards the vehicle 100. By the time the further vehicle 300 does this, the vehicle 100 may have moved the third light beam 700 away from the further vehicle 300. Thus, the response light beam from the further vehicle 300 may be outside the FoV of the optical signal detector 106 of the vehicle 100. In this embodiment, as described above, at iterations i = 2, 3, and so on, the search area 306 is scanned in a sequence of none overlapping concentric circular loops (e.g. loops 504, 704, 708). Each of these loops is repeated twice. Thus, advantageously, if the FoV of the optical signal detector 106 is moved away from the response light beam from the further vehicle 300 in the first performance of a scanning loop, the optical signal detector 106 is directed towards the response light beam from the further vehicle 300 in the second performance of that scanning loop.

Thus, the response optical signal tends to be received by the vehicle 100.

Thus, in the third iteration of step s8, the processor 108 determines that a response optical signal is received at the optical signal detector 106.

Returning now to the description of Figure 2, in response to the processor 108 determining that a response optical signal is received at the optical signal detector 106 at some iteration of step s8, the method proceeds to step s12.

At step s12, the processor 108 stops the optical signal transmitter 104 scanning the search area 306.

At step s14, the processor 108 determines a location of the further vehicle 300 using the measured response light beam 900. The processor 108 then uses the determined location of the further vehicle 300 to transmit a communication optical signal to the further vehicle.

Figure 9 is a schematic illustration (not to scale) showing the communication optical signals 900, 902 being transmitted between the vehicles 100, 300.

Thus, a two-way communication link between the two vehicles 100, 300 is provided.

In this embodiment, a tracking process is performed to actively align the light beams 900, 902 during data transfer between the vehicles 100, 300.

Thus, an optical communications process between submersible vehicles in an underwater environment is provided.

Advantageously, the above described method and apparatus allow one or more nodes of an optical communications system to efficiently and robustly acquire the location of one or more other nodes in a relatively short period of time.

The above described system and method tends to facilitate the acquisition of a datalink between two nodes.

The above described system and method is particularly useful in environments in which certain parameters (including, for example, range between nodes, turbidity of optical medium, locations of nodes, etc.) are unknown.

It should be noted that certain of the process steps depicted in the flowchart of Figure 2 and described above may be omitted or such process steps may be performed in differing order to that presented above and shown in Figure 2. Furthermore, although all the process steps have, for convenience and ease of understanding, been depicted as discrete temporally-sequential steps, nevertheless some of the process steps may in fact be performed simultaneously or at least overlapping to some extent temporally.

In the above embodiments, the optical communication system is implemented on board an unmanned submersible vehicle. Also, optical communications is performed between two submersible water vehicles. However, in other embodiments the optical communication system is implemented on a different entity, such as a building, a static underwater sensor node, or a different type of vehicle such as a manned submersible vehicle, a land-based vehicle, or an aircraft. In some embodiments, optical communications is performed between a different number of entities, such as more than two entities. Also, optical communications may be performed through more than one type of optical medium, such as through both air and water, e.g. if only one of the entities is underwater while the other is not underwater.

In the above embodiments, the optical signal transmitter and the optical signal detector are mechanically steerable. However, in other embodiments one or both of the transmitter and the detector is electronically steerable. In some embodiments one or both of the transmitter and the detector is not steerable relative to the vehicle. For example, in some embodiments, the optical signal transmitter and the optical signal detector are fixed relative to vehicle, and the vehicle is moved to vary the directions of the FoVs of the transmitter and the detector.

In the above embodiments, the light beam is not scanned during a first iteration of steps s4 to s8. However, in other embodiments, for example in embodiments in which the search area is larger than the maximum beam divergence, the first light beam is scanned over an area. In some embodiments, the first iteration of steps s4 to s8 may be, in effect, omitted, and the method may begin with iteration number 2, or higher.

In the above embodiments, the loops in which the optical signal transmitter is moved across when scanning the search area are substantially circular. Also, each loop is followed twice. However, in other embodiments, one or more of the loops is a different shape, i.e. not circular. Also, in some embodiments, one or more of the loops is scanned a different number of times, for example, once (e.g. if the vehicle is equipped with an AoA sensor having a wide FoV), or more than twice.

In the above embodiments, the divergence of a transmitted beam is varied for the purpose of establishing a communications link between the vehicle and the further vehicle. However, in other embodiment, the beam divergence may be varied for a different purpose, for example for data transfer after the communications link is established.

What will now be described is a further embodiment of an optical communications system that transmits wide divergence optical beams to establish or acquire a communications link with a different entity, and then transmits a narrow divergence beam for data transfer to and/or from that entity.

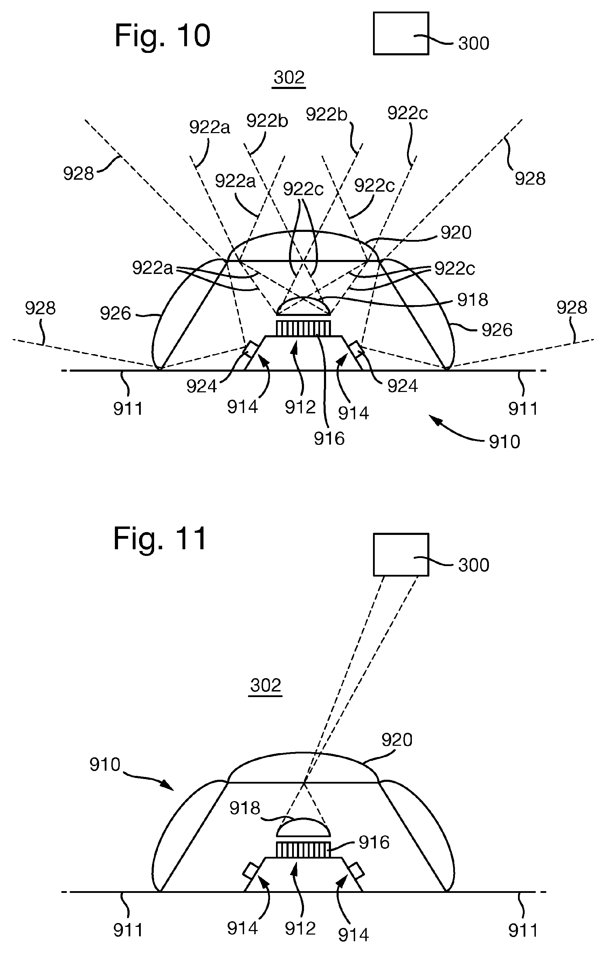

Figure 10 is a schematic illustration (not to scale) showing an embodiment of an optical communications system 910.

In this embodiment, the optical communications system 910 is submersed in water 302, which may be sea water. The optical communications system 910 is fixed to a surface 911, which may be, for example, a sea bed.

The optical communications system 910 comprises three subsystems, namely a central subsystem 912, and two further subsystems 914 positioned at opposite sides of the central sub-system 912.

In this embodiment, the optical communications system 910 further comprises one or more optical detectors (not shown) for detecting incident optical signals. For example, transmit and receive modules may be combined into a single module, thereby providing a system of reduced size. For example, in some embodiments, a light source is located at the centre of one or more (e.g. each) optical detector elements. This light source may be, for example, an LED, Laser diode, VCSEL (Vertical Cavity Surface Emitting Laser), or an optical fibre coupled to a laser, an LED, or a VCSEL. In some embodiments, a light source is located between the optical detectors. This tends to reduce the impact of adding a light source to the detector element. However, in some embodiments, the optical communications system 910 does not include an optical detector, and may, for example, be used together with a separate receive module.

In this embodiment, the central subsystem 912 comprises an array of optical signal transmitters 916, a first lens 918, and a fluidic lens 920. The array of optical signal transmitters 916 comprises a plurality of optical transmitters which may be controlled, e.g. by a controller (not shown) coupled to the array 916, to electronically steer a light beam transmitted by the array 916. Three examples of steered light beams transmitted by the array 916 are shown in Figure 10 as bounded by respective pairs of dotted lines and indicated by the reference numerals 922a, 922b and 922c respectively. In this embodiment, the array of optical transmitters 916 is arranged to transmit optical signals 922a-c to the first lens 918. The first lens 918 focusses the optical signals 922a-c onto the fluidic lens 920, from which the optical signals 922a-c are emitted into the water 302.

In this embodiment, each of the further subsystems 914 comprises a respective optical signal transmitter 924 and a respective lens 926. For each further subsystem 914, the optical transmitter 924 of that subsystem 914 is arranged to transmit respective optical signals 928 to the lens 926 of that subsystem 914, from which those optical signals 928 are emitted into the water 302.

In other embodiments, the optical communications system 910 comprises a different number of subsystems, e.g. more than three. For example, in some embodiments, the optical communications system comprises a central subsystem and a plurality (e.g. 6) further subsystems arranged around the periphery of the central subsystem, each further subsystem facing in a different respective direction. In some embodiments, multiple subsystems comprise fluidic lenses.

The optical communications system 910 is shown in Figure 10 performing a process of acquiring a communications link with the further vehicle 300. During performance of this process of acquiring a communications link, the fluidic lens 920 is controlled such that the divergence of the transmitted beam 922a-c is relatively large (e.g. greater than or equal to 50°, e.g. 50° to 60°). For example, the fluidic lens 920 may be controlled such that the beam divergence of an optical signal 922a-c transmitted by the central sub-system 912 is a maximum achievable beam divergence.

Also, the lenses 926 are configured such that the divergences of the light beams 928 transmitted by the further subsystems 914 are relatively large (e.g. greater than or equal to 50°, e.g. 50° to 60°).

During the process of acquiring a communications link, the transmitted light beams 922a-c 928 may be, for example, continuous wave (CW) beams, alternating current (AC) modulated beams, low data rate optical signals for performing an Identification Friend or Foe (IFF) process, or a combination thereof.

In this embodiment each of the subsystems 912, 914 has a respective different facing. In other words, the central sub-system 912 and each of the further subsystems 914 is configured to transmit optical signals into the water 302 in a different direction.

Advantageously, transmission of wide divergence light beams in a plurality of different directions by the optical communications system 910 tends to increase the likelihood that the further vehicle 300 receives an optical signal.

After receiving a wide divergence light beam transmitted by the optical communications system 910, the further vehicle 300 transmits a response optical signal to the optical communications system 910. The optical communications system 910 receives the response optical signal from the further vehicle 300 and performs tracking and communication, for example, as described in more detail earlier above with reference to step s14.

Figure 11 is a schematic illustration (not to scale) showing the optical communications system 910 tracking and communicating with the further vehicle 300.

In this embodiment, the optical communications system 910 determines the relative location of the further vehicle 300 using the response optical signal received from the further vehicle. The array 916 is then controlled (e.g. by the controller) to transmit a further optical signal 930 to the further vehicle 300. In this embodiment, the further optical signal 930 encodes data that is being transferred (for example, at a higher rate compared to the transfer of any data occurring during the communication acquisition process shown in Figure 10) between the optical communications system 910 and the further vehicle 300. The further optical signal 930 has a higher signal level than the optical signals 922a-c, 928 transmitted during the communication acquisition process shown in Figure 10.

In this embodiment, the array 916 is controlled (e.g. by the controller) so that the further optical signal 930 is electronically steered towards the further vehicle 300.

Also, the fluidic lens 920 is controlled (e.g. by the controller) so that the further optical signal 930 has a relatively narrow beam divergence compared to the divergences of the beam 922a-c, 928 transmitted during the communication acquisition process shown in Figure 10. The further optical signal 930 may also have increased irradiance compared to the irradiances of the beam 922a-c, 928 transmitted during the communication acquisition process. In some embodiments, the beam divergence and/or the irradiance of the further optical signal 930 is determined (e.g. optimised) based on a determination of a distance between the optical communications system 910 and the further vehicle 300.

Thus, a further embodiment of an optical communications system is provided.

Advantageously, a smart transmit system which uses electronic beam steering for acquisition, tracking and data transfer is provided. Wide divergence beams are transmitted during the acquisition phase (with optional IFF), which are then switched to a narrower beams for the main transfer of information. This advantageously tends to reduce the power used to transmit at a set data rate. Also, data transfer tends to be more covert.

In some embodiments, the optical communications system 910 comprises a mechanical beam steering module, for example a pan/tilt unit, instead of or in addition to the electronic beam steering means.

In some embodiments, the optical communications system 910 comprises a different type of means for varying the divergence of a transmitted light beam instead of or in addition to the fluidic lens. For example, the optical communications system 910 may comprise a translating lens, a zoom lens, a programmable liquid crystal lens, or a programmable holographic lens (such as a switchable Bragg Element or a Digilens).

In the above embodiments, the optical communications system comprises means for varying beam divergence. However, in other embodiments, the optical transmitter is not configured for selectively varying the divergence of a beam. For example, in some embodiments, the optical communications system comprises a plurality of optical signal transmitters, each of which is configured to produce a beam having a different divergence and irradiance.

In the above embodiments, the vehicle illuminates the search area with beams having successively decreasing beam divergence, and hence successively increasing irradiance. However, in other embodiments, the vehicle illuminates the search area in a different way.

**Claims**

1. A method of transmitting an optical signal by a Free Space Optical, FSO, communication system, the method comprising:

transmitting, by an optical signal transmitter, an optical signal into at least part of a volume of an optical medium; and
controlling, by a controller, the optical signal transmitter, to scan the at least part of the volume using the optical signal in a sequence of non-overlapping loops.

2. A method according to claim 1, wherein the sequence of non-overlapping loops is a sequence of non-overlapping, concentric loops.

3. A method according to claim 1 or 2, wherein each of loops in the sequence is a substantially circular loop.

4. A method according to any of claims 1 to 3, wherein:

a beam divergence of the transmitted optical signal is:

$$\phi = \frac{\theta}{2j-1}$$

and radii of the loops in the sequence of loops are equal to:

$$r = \frac{k}{2j-1}\theta, \ \text{for } k = 0, ..., j$$

where θ is a maximum divergence of the optical signal transmitter, and *j* is an integer.

5. A method according to any of claims 1 to 4, wherein the step of controlling comprises controlling the optical signal transmitter to scan the at least part of the volume by repeating at least part of one or more of the loops at least twice.

6. A method according to claim 5, wherein at least part of one or more of the loops is repeated exactly twice.

7. A method according to any of claims 1 to 6, wherein transmitting the optical signal comprises:

generating an optical signal;
modifying a divergence and an irradiance of the generated optical signal such that at least one of the divergence and the irradiance is equal to a preselected value; and
transmitting the modified optical signal.

8. A method according to any of claims 1 to 7, the method further comprising:

transmitting, by the optical signal transmitter or a further optical signal transmitter, a further optical signal into at the least part of the volume, the further optical signal having a different beam divergence and irradiance than the optical signal; and
controlling, by a controller, the optical signal transmitter or the further optical signal transmitter, to scan the at least part of the volume using the further optical signal in a further sequence of non-overlapping loops.

9. A method according to any of claims 1 to 8, the method further comprising:

responsive to transmitting the optical signal into the at least part of the volume, receiving, by an optical signal detector, a response optical signal; and
determining, using measurements of the response optical signal by the optical signal detector, by one or more processors, a location of a source of the response optical signal.

10. A method according to claims 9, wherein a field of view of the optical signal transmitter is directed in a same direction as a field of view of the optical signal detector.

11. A method according to claims 9, wherein the optical medium is water.

12. A Free Space Optical, FSO, communication system comprising:

an optical signal transmitter configured to transmit an optical signal into at least part of a volume of an optical medium; and
a controller configured to control the optical signal transmitter to scan the at least part of the volume using the optical signal in a sequence of non-overlapping loops.

13. An FSO communication system according to claim 12, wherein:

the sequence of non-overlapping loops is a sequence of non-overlapping, concentric circular loops; and
the controller is further configured to scan the at least part of the volume by repeating at least part of one or more of the loops at least twice.

14. An FSO communication system according to claim 12 or 13, further comprising:

an optical signal detector configured to, responsive to the optical signal transmitter transmitting the optical signal into the at least part of the volume, receive a response optical signal; and one or more processors configured to determine, using measurements of the response optical signal by the optical signal detector, a location of a source of the response optical signal; wherein

a field of view of the optical signal transmitter is directed in a same direction as a field of view of the optical signal detector.

15. A vehicle comprising an FSO communication system according to any of claims 12 to 14, wherein the vehicle is a submersible vehicle.

# Fig. 1

# Fig. 2

# Fig. 3

# Fig. 4

# Fig. 5

# Fig. 6

# Fig. 7

# Fig. 8

302    306

100

900

θ₃

900

300

306

700

700

# Fig. 9

100    900    302    902

300

900

902

## Fig. 10

## Fig. 11

Europäisches
Patentamt

European
Patent Office

Office européen
des brevets

# EUROPEAN SEARCH REPORT

Application Number

EP 16 17 4856

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/141753 A1 (ANDREU-VON EUW C; NEFF B W; ZHOU Z) 22 July 2004 (2004-07-22) <br> * paragraph [0009] - paragraph [0011]; claims 1-3,9,15,17 * <br> * paragraph [0022] - paragraph [0024] * <br> * paragraph [0043] - paragraph [0045] * <br> * paragraph [0026] - paragraph [0038]; figures 1, 3-6 * <br> * paragraph [0041] - paragraph [0042] * | 1-15 | INV. <br> H04B10/112 <br> H04B13/02 |
| X <br> A | US 6 469 815 B1 (POON CHIE W [US] ET AL) 22 October 2002 (2002-10-22) <br> * column 6, line 43 - column 7, line 8; claim 1; figures 1, 6 * <br> * column 3, line 45 - column 4, line 33 * | 1-3,5,6, 8-15 <br> 4,7 | |
| X <br> A | US 2003/043435 A1 (OETTINGER ERIC GREGORY [US] ET AL) 6 March 2003 (2003-03-06) <br> * paragraph [0016] - paragraph [0018]; figures 7,8 * <br> * paragraph [0048] - paragraph [0053]; claims 1-3,8,10,11 * | 1-3,5,6, 8-15 <br> 4,7 | |
| X <br> A | US 2015/215040 A1 (DICKSON WILLIAM C [US] ET AL) 30 July 2015 (2015-07-30) <br> * paragraph [0057] - paragraph [0064]; figures 3,7 * <br> * paragraph [0016] - paragraph [0017]; claims 1,2,5 * <br> * paragraph [0018] - paragraph [0025] * | 1-3,5,6, 8-15 <br> 4,7 | TECHNICAL FIELDS SEARCHED (IPC) <br><br> H04B |
| A | US 2012/308239 A1 (SHETH SAMIR S [US] ET AL) 6 December 2012 (2012-12-06) <br> * explicit disclosure of a circular scanning pattern; paragraph [0357] * | 1-15 | |

The present search report has been drawn up for all claims

| Place of search | Date of completion of the search | Examiner |
|---|---|---|
| Munich | 25 November 2016 | Gäde, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 17 4856

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2016

| Patent document cited in search report | | Publication date | Patent family member(s) | | Publication date |
|---|---|---|---|---|---|
| US 2004141753 | A1 | 22-07-2004 | EP | 1590900 A2 | 02-11-2005 |
| | | | US | 2004141753 A1 | 22-07-2004 |
| | | | WO | 2004068728 A2 | 12-08-2004 |
| US 6469815 | B1 | 22-10-2002 | NONE | | |
| US 2003043435 | A1 | 06-03-2003 | NONE | | |
| US 2015215040 | A1 | 30-07-2015 | AU | 2015211011 A1 | 18-08-2016 |
| | | | EP | 3100378 A1 | 07-12-2016 |
| | | | US | 2015215040 A1 | 30-07-2015 |
| | | | WO | 2015116730 A1 | 06-08-2015 |
| US 2012308239 | A1 | 06-12-2012 | US | 2012308239 A1 | 06-12-2012 |
| | | | WO | 2012167135 A1 | 06-12-2012 |

EPO FORM P0459

For more details about this annex : see Official Journal of the European Patent Office, No. 12/82